# EUROPÄISCHE PATENTSCHRIFT

(11) **EP 0 771 050 B1**
(45) Veröffentlichungstag und Bekanntmachung des Hinweises auf die Patenterteilung: **07.06.2000**
(21) Anmeldenummer: 96116551.1
(22) Anmeldetag: 16.10.1996
(51) Int. Cl.: H01R 9/24, H02G 5/08, G02B 6/42

(54) **Elektrische Anschlussvorrichtung für Geräte**
Electrical connection device for apparatus
Dispositif de raccordement électrique pour appareils

(30) Priorität: 28.10.1995 DE 19540329
(43) Veröffentlichungstag der Anmeldung: 02.05.1997
(73) Patentinhaber: Gebrüder Merten GmbH & Co. KG, D-51674 Wiehl (DE)
(72) Erfinder: Erbse, Karl-Ulrich, Dipl.-Phys., 51647 Gummersbach (DE); Stefanski, Manfred, 51647 Gummersbach (DE)
(74) Vertreter: Selting, Günther, Dipl.-Ing.

(56) Entgegenhaltungen:
- CH-A- 679 193
- DE-A- 3 302 373
- DE-A- 4 010 777

## Beschreibung

Die Erfindung bezieht sich auf eine elektrische Anschlußvorrichtung, wie Anschlußdose oder -kasten, mit einer darin befindlichen Klemmeinrichtung, wie Klemmleiste oder Klemmstein, an der einerseits die gebäudeseitige Stromleitung und andererseits eine bewegliche Anschlußleitung eines elektrischen Gerätes anschließbar sind.

In der DE 32 26 265 A1 ist eine flexible elektrische Leitung beschrieben, die außer den elektrischen Leitern für den Netzanschluß eines Gerätes noch einen Lichtleiter enthält, über den optische Signale übertragen werden können.

In der DE 32 27 770 C2, die als nächstliegender Stand der Technik angesehen wird, ist eine elektrische Steckvorrichtung mit einer Steckdose und einem Stecker beschrieben, die den Anschluß einer flexiblen Netzleitung an eine fest installierte Netzleitung ermöglicht und außerdem einen gebäudeseitig installierten Lichtwellenleiter mit einem Lichtwellenleiter der anzuschließenden flexiblen Leitung optisch verbindet. Hierzu ist wenigstens ein Kontaktteil der elektrischen Steckvorrichtung zugleich als Lichtwellenleiter-Steckvorrichtung ausgebildet. Die Steckvorrichtung verbindet den elektrischen und den optischen Teil einer Leitung mit den gebäudeseitigen elektrischen Versorgungsleitungen und den optischen Datenleitungen.

Zum Fernschalten, Fernsteuern, Regeln und Überwachen von Geräten werden elektrische Bussysteme verwendet, die an den Enden der Busleitungen Busankoppler besitzen, an die, ggf. über Schnittstellen, die Steuerein- oder -ausgänge der Geräte anschließbar sind. Die Busankoppler können komplexe elektronische Schaltungsanordnungen mit einem Mikroprozessor enthalten und sind in der Lage, Datentelegramme zu erzeugen und zu senden sowie zu empfangen und auszuwerten, ferner ankommende Steuerbefehle zu verarbeiten. Ein derartiges Bussystem für die Gebäudesystemtechnik ist in der EP 0 344 609 B1 beschrieben.

Die oben beschriebenen Anschlußvorrichtungen sind sämtlich Steckvorrichtungen, bei denen der Anschluß durch den Benutzer mit einem Stecker erfolgt. Die Erfindung bezieht sich dagegen auf eine Anschlußvorrichtung mit fester Verbindung der Anschlußleitung mit den Netzleitungen.

Eine derartige Anschlußvorrichtung soll den Zweck erfüllen, ein externes Gerät, beispielsweise einen Elektroherd ein Nachtstromspeicherheizgerät oder einen Warmwasserspeicher an das Stromnetz (Hausnetz) und an einen elektrischen Steuerbus anzuschließen, wobei zur Vermeidung von Störeinstreuungen von der Netzspannung die Signalübertragung von der Anschlußvorrichtung bis zum externen Gerät auf optischem Wege erfolgt.

Während eine elektrische Signalleitung, die zusammen mit einer Versorgungsleitung in einem gemeinsamen Leitungsstrang eingebettet ist, von der Versorgungsleitung gestört wird, werden optische Signale durch Ströme oder Spannungen nicht beeinflußt.

Die Aufgabe der Erfindung besteht darin, eine Anschlußvorrichtung mit fester Verbindung für den Anschluß eines elektrischen Gerätes an das Stromnetz und den Anschluß an ein elektrisches Busleitsystem zu schaffen, die die Übertragung von Lichtsignalen ermöglicht, so daß eine Beeinflussung der Datenleitungen von den Netzleitungen nicht stattfindet.

Die Aufgabe wird erfindungsgemäß mit einer Anschlußvorrichtung gemäß Patentanspruch 1 gelöst.

Die erfindungsgemäße Anschlußvorrichtung ist generell auf der Grundlage üblicher Anschlußvorrichtungen für die Stromversorgung ausgebildet. Derartige Anschlußvorrichtungen weisen einen Träger für eine Klemmeinrichtung auf, der als Rahmen, Platte, Dose oder Kasten ausgebildet und mit einer Haube oder einem Deckel abgedeckt ist. In oder an dem Träger ist die Klemmeinrichtung angeordnet, die aus einer oder mehreren Klemmleisten oder dgl. bestehen kann, an der einerseits die gebäudeseitigen Stromleitungen und andererseits eine Anschlußleitung für ein externes Gerät angeschlossen werden. Der Träger kann noch eine Zugentlastungsvorrichtung für die Anschlußleitung aufweisen, die meistens der Klemmeinrichtung gegenüberliegend am Träger angeordnet ist. Bei dieser Anordnung ist dafür Sorge getragen, daß zwischen der Zugentlastungsvorrichtung und der Klemmeinrichtung einerseits und einer Begrenzungswand des Trägers und der Klemmeinrichtung andererseits genügend Anschlußraum für die Stromleitungen vorhanden ist. Der Träger läßt sich mit Schrauben an einer Wand montieren.

Nach der Erfindung weist die Anschlußvorrichtung außer der Klemmeinrichtung für die Stromleitungen noch einen elektrischen Busankoppler auf, der in einem von der Klemmeinrichtung getrennten Installationsraum des Trägers angeordnet ist und über eine separate elektrische Anschlußeinrichtung für eine elektrische Busleitung verfügt Der Busankoppler ist mit wenigstens einem lichtelektrischen Wandler verbunden,- dessen Lichteinund/oder -austrittsfenster an eine Lichtleiteranschlußvorrichtung gelegt ist, mit der der mindestens eine Lichtleiter der Anschlußleitung koppelbar ist. Auf diese Weise dient die Anschlußvorrichtung nicht nur zum Herstellen elektrischer oder optischer Kopplungen, sondern sie dient zugleich zur Umwandlung elektrischer Signale in Lichtsignale bzw. zur Umwandlung von Lichtsignalen in elektrische Signale. Während die Datenverarbeitung in dem gebäudeseitigen elektrischen Hausleitsystem durchgeführt wird, hat die Anschlußvorrichtung die Aufgabe, Signale, die von dem angeschlossenen Gerät über Lichtleiter übertragen werden, in elektrische Signale umzuwandeln und/oder elektrische Signale, die von dem Busankoppler erzeugt werden, in Lichtsignale für das angeschlossene Gerät umzuwandeln. Auf diese Weise können die üblichen elektrischen Hausleitsysteme verwendet werden, die vom Versorgungsnetz entkoppelt sind und somit durch das Versorgungsnetz nicht gestört werden, während der Anschluß des elektrischen Gerätes über ein flexibles Kabel erfolgt, in dem die elektrischen Versorgungsleitungen mit Lichtleitern kombiniert sind. Die Signale in Lichtwellenleitern werden durch Spannungen oder Ströme der Versorgungsleitungen nicht beeinflußt, so daß kein Übersprechen stattfindet.

Erfindungsgemäß ist also der Übergang zwischen Elektronik und Lichtsignaltechnik in der Anschlußvorrichtung selbst vorgesehen, so daß keine zusätzlichen Apparate benötigt werden und der Anschluß eines elektrischen Gerätes in der üblichen Weise durch einfaches Anschließen eines Anschlußkabels an die Anschlußvorrichtung erfolgen kann. Die über den Datenbus übertragenen analogen oder digitalen elektrischen Signale werden in der Anschlußvorrichtung in optische Signale umgewandelt. Diese optischen Signale werden in dem elektrischen Anschlußkabel übertragen und im Gerät wieder in elektrische Signale umgewandelt. In der Regel ist der Signalfluß zwischen dem Gerät und dem Datenbus bidirektional. Dieser bidirektionale Datenfluß kann über zwei Lichtwellenleiter (einen für jede der beiden Richtungen) geführt werden oder auch im Einleiterbetrieb, wenn für die Hinleitung ein anderes Zeitfenster zur Verfügung steht als für die Rückleitung.

Dadurch, daß in der Anschlußvorrichtung sowohl Stromleitung (Hausnetz) als auch eine Busleitung zusammengeführt sind, muß dafür gesorgt werden, daß in der Anschlußvorrichtung selbst die Gefahr eines unzulässigen Potentialzustandes vermieden wird. Entsprechend sind für den Anschluß der gebäudeseitigen Versorgungsleitungen mit der geräteseitigen Anschlußleitung sowie für den elektrischen Busankoppler getrennte Installationsräume vorgesehen, wobei die Installationsräume der Klemmeinrichtung und des Busankopplers eine nebeneinanderliegende Anordnung aufweisen.

Die Installationsräume können gebildet werden durch eine langgestreckte Dose bzw. einen Kasten, der durch eine Trennwand unterteilt ist, so daß beispielsweise zwei gleich große Installationsräume vorhanden sind. Jeder Installationsraum kann mit einem separaten Deckel verschlossen werden.

Die Dose bzw. der Kasten kann mit Schrauben an der Wand befestigt werden oder als sogenannte Unterputz-Ausführung für den Einbau in eine Wanddose ausgebildet sein.

In einem der beiden Installationsräume sind Aufnahmen für die Klemmeinrichtung, beispielsweise für eine mehrpolige Klemmleiste vorhanden.

Für die bewegliche Anschlußleitung ist eine Zugentlastungsvorrichtung vorteilhaft, die sich innerhalb des Installationsraumes der Klemmeinrichtung befindet und parallel und im Abstand zur Klemmeinrichtung angeordnet ist, so daß die elektrischen Adern L1, L2, L3, N und 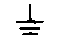 bequem angeschlossen werden können.

Der sich an den Installationsraum für die Klemmeinrichtung anschließende Installationsraum für den Busankoppler besitzt ebenfalls eine Aufnahme, in welche der Busankoppler eingesetzt werden kann. Sofern der Busankoppler als eine separate Baueinheit ausgebildet ist, besitzt diese Baueinheit eine Steckvorrichtung für einen Stecker der Busleitung. Der Installationsraum besitzt aus diesem Grund noch mindestens eine vorbereitete Leitungseinführungsöffnung für die Busleitung.

Für den lichtelektrischen Wandler befindet sich in dem Installationsraum des Busankopplers noch eine weitere Aufnahme. Bei dem lichtelektrischen Wandler kann es sich um einen Sender mit einem elektrischen Eingang und einen optischen Ausgang und um einen Empfänger mit einem optischen Eingang und einem elektrischen Ausgang handeln.

Der elektrische Eingang des Senders und der elektrische Ausgang des Empfängers sind an den Busankoppler angeschlossen, so daß, wie vorstehend bereits erwähnt, die vom Bus kommenden Telegramme oder Signale mit dem Busankoppler empfangen, ggf. umgewandelt und ausgewertet werden und diese Telegramme oder Signale über den elektrischen Eingang in den Sender geleitet werden, wo sie in optische Telegramme oder Signale umgewandelt werden und an einem Lichtaustrittsfenster ausgekoppelt und in einen Lichtleiter der Anschlußleitung eingekoppelt werden, um beispielsweise an das externe Gerät einen Schalt- oder Steuerbefehl zu übertragen.

Ferner werden die von dem externen Gerät kommenden und über den optischen Lichtleiter der Anschlußleitung geleiteten optischen Telegramme oder Signale durch das optische Lichteintrittsfenster in den Empfänger geleitet und dort umgewandelt in elektrische Telegramme oder Signale und dann über den elektrischen Ausgang des Empfängers in den Busankoppler geleitet, von wo sie nach einer evtl. Umformung bzw. Umwandlung in den Bus eingespeist werden, um beispielsweise an ein entferntes Anzeige- oder Meldegerät den momentanen Betriebszustand des externen Gerätes zu melden oder anzuzeigen. Eine praktische Ausgestaltung der Erfindung kann in der Weise erfolgen, daß die Anschlußleitung samt den optischen Leitern in den Installationsraum der Klemmeinrichtung eingeführt werden und von dort die elektrischen Adern der Anschlußleitung an die Klemmeinrichtung angeschlossen werden, aber die optischen Adern der Anschlußleitung durch den Installationsraum der Klemmeinrichtung hindurchgeführt und durch einen Durchlaß zwischen beiden Installationsräumen in den Installationsraum des Busankopplers hineingeführt werden. In dem Installationsraum des Busankopplers befindet sich eine Lichtleiteranschlußeinrichtung des optoelektrischen Wandlers, an deren Lichtein- und/oder -austrittsfenster die Lichtleiter der Anschlußeinrichtung anzuschließen sind.

Sofern der optoelektrische Wandler selbst auf einer Leiterbahnplatine aufgebaut ist, kann die Leiterbahnplatine als Träger der Lichtleiteranschlußeinrichtung benutzt werden. Als Lichtleiteranschlußeinrichtung können Steckklemmen mit geschlitzten Einsteckhülsen mit Außengewinde verwendet werden, die mit einer Überwurfmutter zusammendrückbar sind, so daß ein eingesteckter Lichtleiter am Außenumfang schonend festgeklemmt wird. Für diese Art Anschluß ist ein Werkzeug nicht erforderlich. Allerdings kann es vorteilhaft sein, für die Ankopplung der Leichtleiter die Leiterbahnplatine aus ihrer Aufnahme herauszunehmen, um den Anschluß bequem ausführen zu können.

Eine andere Variante sieht vor, das Lichtein- und -austrittsfenster des optoelektrischen Wandlers mit je einem flexiblen Lichtleiterstück zu koppeln und an den freien Enden mit Lichtleiteranschlußklemmen zu versehen. An die Lichtleiteranschlußklemmen werden die Lichtleiter der Anschlußleitung gekoppelt.

Die flexiblen Lichtleiterstücke sind so lang bemessen, daß sie mit einer ausreichenden Krümmung an die Lichtleiter der Anschlußleitung koppelbar sind. Vorteilhaft sind die aus der Anschlußleitung austretenden Lichtleiterenden noch um ein Stück länger als die austretenden elektrischen Adern, so daß die Verbindung der Lichtleiter mit der Lichtleiterverbindungsklemme nicht unter räumlich beengten Verhältnissen erfolgen muß. Das bedeutet letzten Endes, daß im Gegensatz zum elektrischen Anschluß, bei dem die Leitungsenden meistens gestaucht oder geknickt werden, der sehr empfindliche Lichtleiteranschluß aber ohne Behinderung erfolgen kann, wobei der Lichtleiter mit seiner Überlänge bequem unter dem Deckel der Anschlußdose Platz findet.

Alternativ ragt das freie Ende des Lichtleiterstückes mit der Lichtleiteranschlußeinrichtung in den Installationsraum der Klemmeinrichtung hinein, so daß der elektrische und optische Anschluß in ein und denselben Installationsraum erfolgen kann.

Bei den Lichtein- und -austrittsfenstern handelt es sich um einfachsten Fall um den effektiven Lichtquerschnitt des Lichtleiters. Das Lichtfenster kann auch eine Linse für eine Linsenkopplung oder eine lichtdurchlässige Schutzscheibe enthalten.

Im Rahmen der Erfindung ist ein lichtelektrischer Wandler ein Wandler, der entweder elektrische Signale in Lichtsignale oder Lichtsignale in elektrische Signal umwandelt.

Bei dem Datenbus handelt es sich vorzugsweise um einen elektrischen Datenbus gemäß der "European Installation Bus Association" (EIBA). Der Busankoppler BA kann beispielsweise als "Bus Interface Modul" (BIM) mit einem Mikroprozessor als intelligente Version ausgebildet sein. Der Busankoppler kann alternativ ohne Mikroprozessor auch nur als passive Version ausgebildet sein.

Die Erfindung bewirkt eine sichere Lichtübertragung von der Anschlußvorrichtung zum externen Gerät und in Gegenrichtung, wobei die Lichtverluste durch die Lichtleiterkopplung so gering gehalten werden, daß dadurch die Funktion der Datenübertragung nicht beeinträchtigt wird.

Nachfolgend wird anhand der Zeichnungen ein Ausführungsbeispiel der Erfindung näher beschrieben. Es zeigen:
- Figur 1: die Innenansicht einer leeren Anschlußeinrichtung,
- Figur 2: den elektro-optischen Teil der Anschlußeinrichtung,
- Figur 3: den elektro-optischen Teil nach Figur 2 mit einem Busankoppler,
- Figur 3a: eine Variante nach Figur 3,
- Figur 4: die verdrahtete Innenansicht der kompletten Anschlußeinrichtung nach Figur 1 und

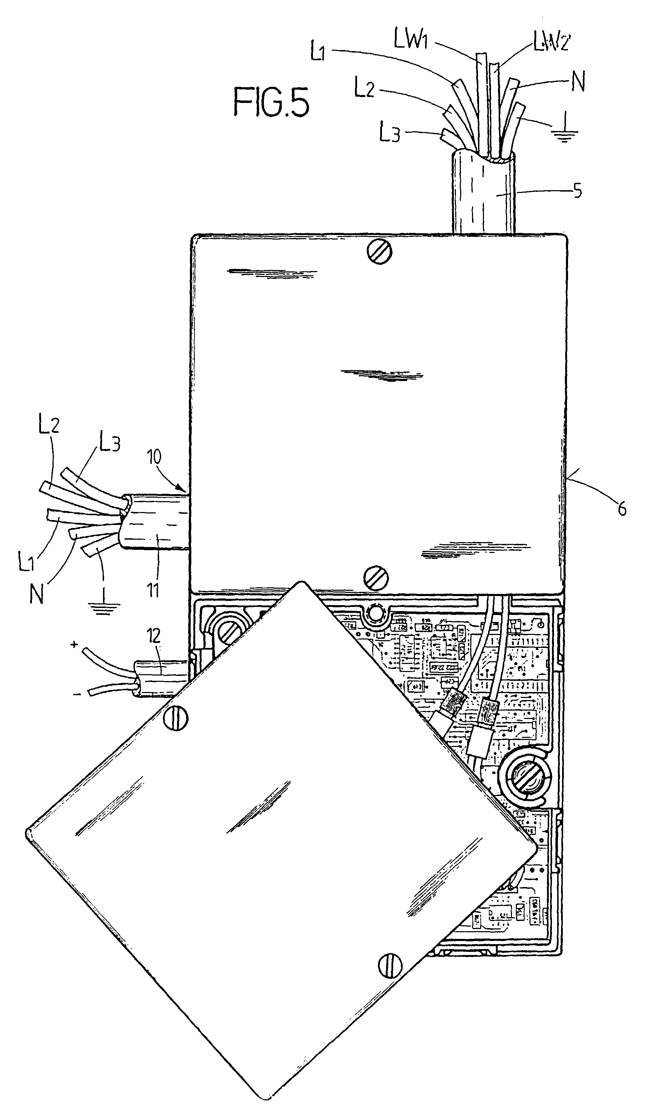

- Figur 5: die Ansicht nach Figur 4 mit aufgesetzten Deckeln.

Die Anschlußvorrichtung dient zum Anschließen eines elektrischen Gerätes, beispielsweise Elektroherd oder Nachtstromspeicherheizgerät, an das Stromversorgungsnetz und zum Anschließen an einen elektrischen Steuerbus zum Fernschalten, Fernsteuern, Regeln oder Überwachen des elektrischen Gerätes, wobei die Übertragung der Signale bzw. Daten von der Anschlußvorrichtung bis zum Gerät auf optischem Wege erfolgt. Eine entsprechende flexible Anschlußleitung 5 enthält dann außer den elektrischen Adern L1, L2, L3, N und 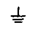 noch zwei optische Adern LW1 und LW2.

Das der Erfindung zugrunde liegenden Ausführungsbeispiel betrifft eine Aufputz-Ausführung zur Anbringung an einer Gebäudewand oder dgl.

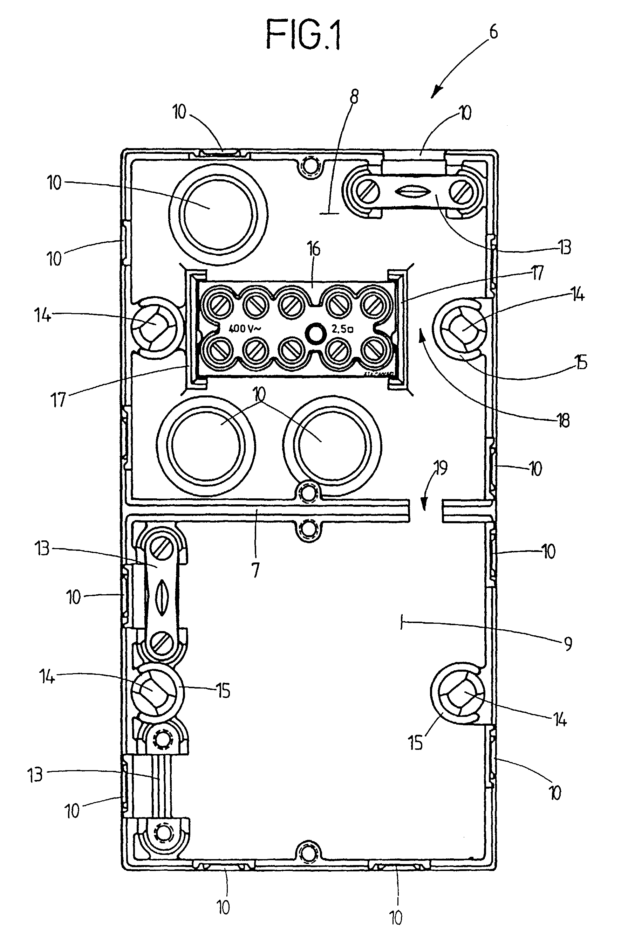

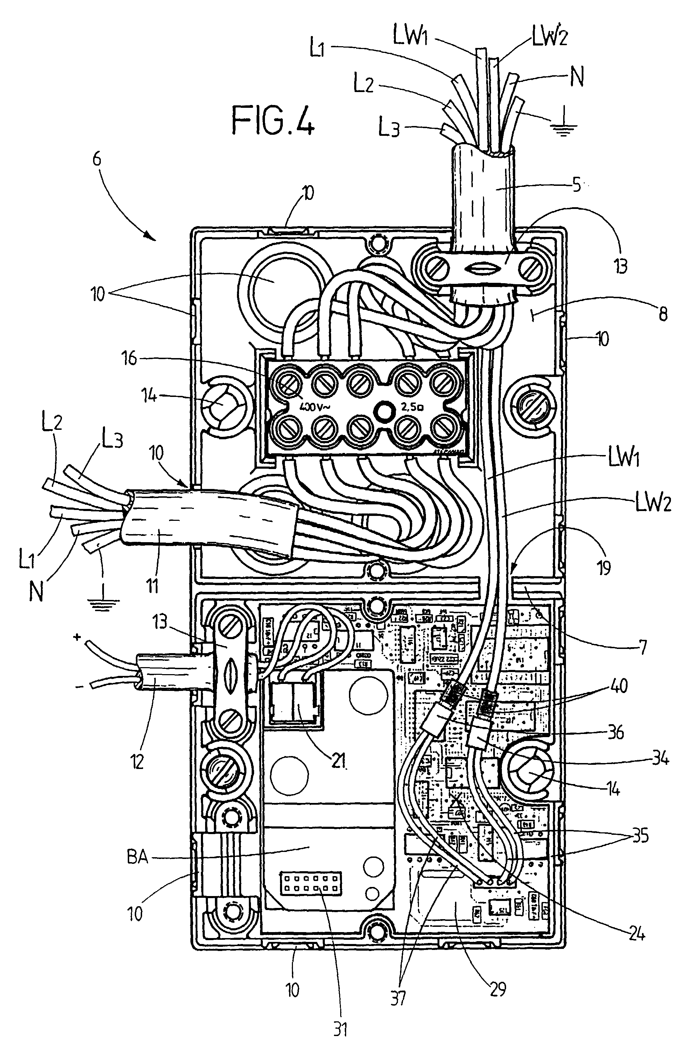

Die in den Figuren 1 und 4 dargestellte Anschlußvorrichtung besteht aus einem rechteckigen Kasten 6,der durch eine Wand 7 in zwei, hier gleichgroße, etwa quadratische Installationsräume 8 und 9 unterteilt ist. Jeder Installationsraum 8, 9 kann mit je einem, nicht näher bezeichneten, Deckel oder mit einem Deckel für beide Installationsräume verschlossen werden.

In den Seitenwänden des Kastens 6 sind vorbereitete Einführungsöffnungen 10 für die Leitungen vorgesehen, die in den Kasten 6 hineingeführt oder aus dem Kasten 6 herausgeführt werden. Es handels sich dabei zunächst um die bereits erwähnte flexible Anschlußleitung 5, die vom Gerät (nicht dargestellt) kommend in den Kasten 6 eingeführt wird. Ferner ist die gebäudeseitige, in der Regel fest verlegte, Stromleitung 11 sowie die Busleitung 12 in den Kasten 6 einzuführen. Wie aus den Figuren 1 und 4 hervorgeht, sind ringsum den Kasten 6 herum Einführungsöffnungen 10 in den Seitenwänden vorgesehen. Ferner sind im Boden des Kastens 6 noch weitere vorbereitete Einführungsöffnungen 10 vorgesehen, so daß für die Hinein- oder Herausführung der Leitungen 5, 11, 12 viele Variationsmöglichkeiten bestehen.

Sofern die Leitungen 5, 11, 12 nicht fest verlegt sind, sind im Einführungsbereich einiger Einführungsöffnungen 10 innerhalb des Kastens 6 Zugentlastungsvorrichtungen 13 vorgesehen, die schellenartig aufgebaut sind und mit denen die Leitungen festgeklemmt werden können. Wie aus Figur 4 hervorgeht, sind die Leitungen 5 und 12 durch Zugentlastungsvorrichtungen 13 gesichert.

Für die Befestigung des Kastens 6 sind im Randbereich des Bodens Befestigungslöcher 14 für eine Schraubenbefestigung vorgesehen. Die Befestigungslöcher 14 sind zum Kasteninnern hin durch hülsenartige Wandungen 15 abgeschirmt.

Der Installationsraum 8 dient für den Anschluß der elektrischen Stromleitungen 5 und 11 und der Installationsraum 9 dient für den Anschluß an einen elektrischen Steuerbus über die Busleitung 12.

Für die Verbindung der Anschlußleitung 5 des Gerätes mit der gebäudeseitigen Stromleitung 11 ist im Installationsraum 8 eine 5-polige Klemmleiste 16 lösbar in Führungen 17 eingesetzt. Es ist in Figur 1 erkennbar, daß die Klemmleiste nicht exakt mittig im Installationsraum 8 angeordnet ist, sondern etwas seitlich aus der Mitte versetzt, so daß zwischen der Führung 17 und der hülsenartigen Wandung 15 ein Durchlaß 18 gebildet wird, der der Zugentlastungsvorrichtung 13 gegenüberliegt. In der Verlängerung der Achse Zugentlastung 13 und Durchlaß 18 befindet sich in der Wand 7 ein Durchbruch 19 zum Installationsraum 9.

Wie aus Figur 4 hervorgeht, sind die elektrischen Adern L1, L2, L3, N und 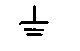 der Anschlußleitung 5 über die Klemmleiste 16 mit den Adern L1, L2, L3, N und 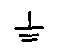 der gebäudeseitigen Stromleitung 11 verbunden, die rechtwinklig zur Anschlußleitung 5 verläuft. Der Installationsraum 8 besitzt ausreichend Anschlußraum, um die elektrischen Adern darin aufnehmen zu können, wie Figur 4 zeigt.

Die Anschlußvorrichtung weist außer der elektrischen Klemmleiste 16 für die Stromleitungen 5,11 noch einen elektrischen Busankoppler BA auf, der in dem Installationsraum 9 angeordnet ist, der mit der elektrischen Busleitung 11 über eine Steckvorrichtung verbindbar ist. Der Busankoppler BA besitzt eine Aufnahme 23, in die die Steckerstifte 20 der Steckvorrichtung hineinragen. Die Busleitung 12 ist mit einem Stecker 21 verbunden, der zu den Stiften 20 komplementäre Buchsen enthält. Durch Einstecken des Steckers 21 in die Aufnahme 23 wird die Busleitung 12 an den Busankoppler BA angeschlossen. Der Busankoppler BA ist eine elektronische Vorrichtung, die mit anderen Busankopplern einen elektrischen Telegrammverkehr durchführen kann, z.B. ein "Bus Interface Modul" (BIM). Er enthält beispielsweise einen Mikroprozessor und elektrische Speicher. Der Busankoppler BA kann Telegramme über die Busleitung 12 senden und über die Busleitung ankommende Telegramme empfangen und auswerten.

Der Busankoppler BA ist mit einem lichtelektrischen Wandler 24 verbunden. Bei dem lichtelektrischen Wandler 24 handelt es sich um einen Sender mit einem elektrischen Eingang 25 und einem optischen Ausgang 26 und um einen Empfänger mit einem optischen Eingang 27 und einem elektrischen Ausgang 28.

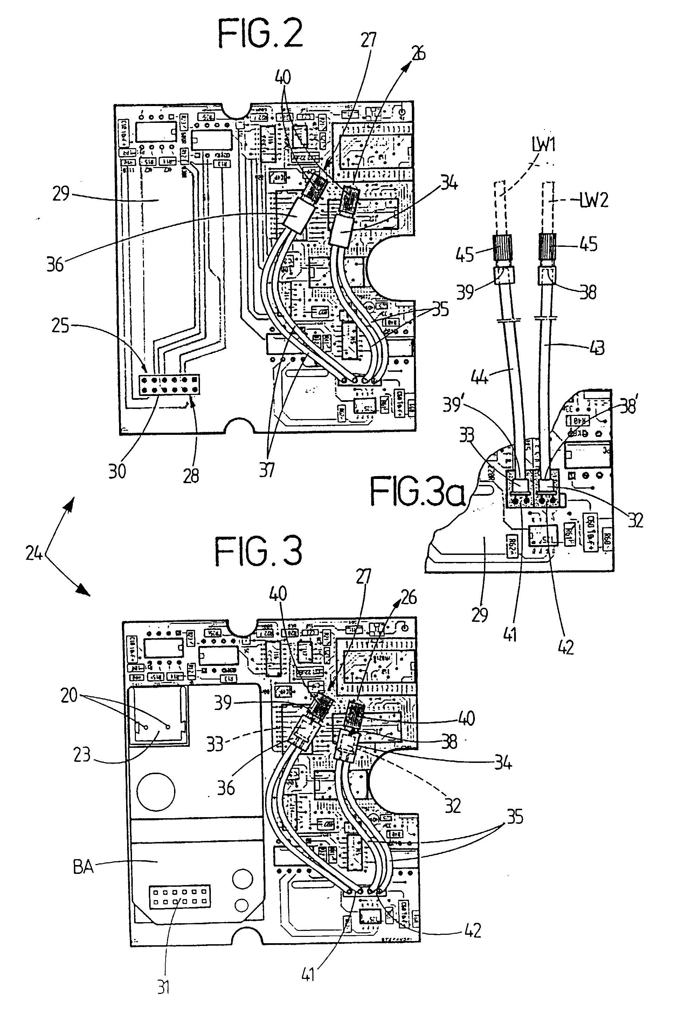

Im Ausführungsbeispiel sind der Busankoppler BA und der lichtelektrische Wandler 24 separate Baugruppen. Sender und Empfänger des lichtelektrischen Wandlers 24 befinden sich auf einer Leiterbahnplatine 29, die gemäß Figur 2 im linken Teil eine freie Fläche mit einer Steckvorrichtung 30 besitzt, die den elektrischen Eingang 25 des Senders und den elektrischen Ausgang 28 des Empfängers enthält. Es sei bemerkt, daß auf der Leiterbahnplatine 29 außer den genannten Baugruppen noch andere Baugruppen angeordnet werden können, die über die Steckvorrichtung 30 an den Busankoppler BA angeschlossen werden können. An der freien Fläche der Leiterbahnplatine 29 ist der Busankoppler BA befestigt. Der Busankoppler BA besitzt eine zu der Steckvorrichtung 30 der Leiterbahnplatine 29 komplementäre Steckvorrichtung 31 mit einem elektrischen Ausgang für den Eingang 25 des Senders und einen elektrischen Eingang für den Ausgang 28 des Empfängers. Beim Zusammenstecken der Steckvorrichtungen 30, 31 wird die Verbindung zwischen dem Busankoppler BA und dem lichtelektrischen Wandler 24 hergestellt.

Der lichtelektrische Wandler 24 besitzt ein optisches Sendeelement 32, z.B. eine lichtemittierende Diode. Das Sendeelement 32 ist in einem separaten Lichteinkoppler 34 angeordnet und über eine flexible zweiadrige elektrische Leitung 35 mit dem lichtelektrischen Wandler 24 verbunden. Ebenfalls ist das Empfangselement 33 in einem separaten Lichtauskoppler 36 angeordnet und über eine flexible zweiadrige elektrische Leitung 37 mit dem lichtelektrischen Wandler 24 verbunden.

Der Lichteinkoppler 34 und der Lichtauskoppler 36 besitzen jeweils ein Lichtfenster 38,39 und eine Lichtleiteranschlußeinrichtung 40 für die Lichtleiter LW1 und LW2.

Die Leiterbahnplatine 29, gemäß Figur 2 und 3, ist zusammen mit dem Busankoppler BA in dem Installationsraum 9 einsetzbar, wie Figur 4 zeigt. Die Figur 4 zeigt ferner, daß die Busleitung 12 mit dem Busstecker 21 an den Busankoppler BA angeschlossen ist. Weiterhin ist aus Figur 4 entnehmbar, daß die Anschlußleitung 5 in den Installationsraum 8 der Klemmeinrichtung 16 eingeführt ist und daß die in der Anschlußleitung 5 eingebetteten Lichtleiter LW1 und LW2 durch den Durchlaß 18 und den Durchbruch 19 hindurch in den Installationsraum 9 in nahezu gerader Liniw geführt und an die Lichtleiteranschlußeinrichtungen 40 angeschlossen sind.

Die über die Busleitung 12 übertragenenen elektrischen Telegramme können mit dem Busankoppler BA empfangen und über den elektrischen Eingang 25 in den Sender geleitet und mit dem Sendeelement 32 als optische Telegramme in den Lichtleiter LW1 eingekoppelt werden. Die vom externen Gerät durch den Lichtleiter LW2 übertragenen optischen Telegramme können mit dem Empfangselement 33 ausgekoppelt und in ein elektrisches Telegramm umgewandelt und über den elektrischen Ausgang 28 in den Busankoppler BA geleitet werden, der die Telegramme über die Busleitung 12 an eine Zieladresse sendet. Selbstverständlich kann mit dem Busankoppler auch bereits eine Auswertung der Telegramme erfolgen, so daß beispielsweise auf den optischen Übertragungsstrecken nur noch Steuerbefehle laufen.

Die vorstehend beschriebene Ausführung mit beweglichen Lichtein- und Lichtauskopplern, 34 und 36, hat den Vorteil, daß die Ankopplung der Lichtleiter LW1 und LW 2 unproblematisch ist, unterschiedliche Ablängungen der Lichtleiter LW1 und LW2 aus der Anschlußleitung 5 ausgeglichen werden können mit den flexiblen elektrischen Verbindungsleitungen 35, 37, so daß die Lichtleiter LW1 und LW2, stets ohne geknickt oder zu eng gekrümmt zu werden, angekoppelt werden können.

Alternativ können die Sende- und Empfangselemente 32, 33 auf der Leiterbahnplatine 29 angeordnet sein, so daß die flexiblen elektrischen Leitungen 35, 37 entfallen können (Figur 3a). An den Anschlußpunkten 41, 42 auf der Leiterbahnplatine 29 können die Sende- und Empfangselemente 32, 33 unmittelbar gelötet werden. Anstelle der flexiblen elektrischen Leitungen 35, 37 sind die Lichtfenster 38, 39 der Sende- und Empfangselemente 32, 33 mit je einem flexiblen Lichtleiterstück 43, 44 gekoppelt, das an dem freien Ende eine Lichtleiteranschlußvorrichtung 45, wie Steckklemme, aufweist, in die die Lichtleiter LW1 und LW2 eingesteckt und festgeklemmt werden.

Die Steckklemme kann eine geschlitzte Einsteckhülse mit Gewinde und kegeligem Ende enthalten, die mit einer Überwurfmutter zusammendrückbar ist, so daß ein eingesteckter Lichtleiter LW1, LW2 am Außenmantel schonend festgeklemmt wird. Bei dieser Variante bildet das flexible Lichtleiterstück 43, 44 einen Längenausgleich bei dem Anschluß der Lichtleiter LW1 und LW2. Selbstverständlich kann auf die flexiblen Lichtleiterstücke 43, 44 verzichtet werden und die Lichtleiteranschlußvorrichtungen 45 fest mit den Sende- und Empfangselementen 32, 33 auf der Leiterbahnplatine 29 verbunden sein, so daß in diesem Fall anstelle der beweglichen Lichteinkoppler 34 und Lichtauskoppler 36 unbewegliche Lichtein- und Lichtauskoppler 34, 36 vorhanden sind. Eine evtl. erforderliche Längenanpassung der Lichtleiter LW1 und LW2 erfordert in diesem Fall eine exakte Abmantelung der Anschlußleitung 5.

## Patentansprüche

1. Elektrische Anschlußvorrichtung mit einem gehäuseartigen Träger (6) und einer darin befindlichen Klemmeinrichtung (16) zum festen Verbinden der Stromleitungen (11) der gebäudeseitigen Installation mit der Anschlußleitung (5) eines elektrischen Gerätes,
wobei die Anschlußleitung (5) außer den elektrischen Leitungen noch mindestens einen Lichtleiter (LW1,LW2) enthält,
**dadurch gekennzeichnet**,
daß die Anschlußvorrichtung einen elektrischen Busankoppler (BA) aufweist, der in einem von der Klemmeinrichtung (16) getrennten Installationsraum (9) des Trägers (6) angeordnet ist und über eine elektrische Kontaktvorrichtung (20) für eine Busleitung (12) verfügt, und daß der Busankoppler (BA) mit einem lichtelektrischen Wandler (24) verbunden ist, der über eine Lichtleiteranschlußeinrichtung (40,45) mit dem mindestens einen Lichtleiter (LW1,LW2) der Anschlußleitung (5) optisch koppelbar ist.

2. Elektrische Anschlußvorrichtung nach Anspruch 1, dadurch gekennzeichnet, daß die Klemmeinrichtung (16) für die Stromleitungen einerseits sowie der Busankoppler (BA) und der lichtelektrische Wandler (24) andererseits in nebeneinanderliegenden Installationsräumen (8,9) des Trägers (6) angeordnet sind.

3. Elektrische Anschlußvorrichtung nach Anspruch 1 oder 2, dadurch gekennzeichnet, daß die Anschlußleitung (5) und deren Lichtleiter (LW1,LW2) in den Installationsraum (8) der Klemmeinrichtung (16) eingeführt sind, daß der mindestens eine Lichtleiter (LW1,LW2) durch den Installationstaum (8) der Klemmeinrichtung (16) hindurch bis in den Installationsraum (9) des Busankopplers (BA) verläuft und dort mit einer Lichtleiteranschlußeinrichtung (40,50) des lichtelektrischen Wandlers (24) gekoppelt ist.

4. Elektrische Anschlußvorrichtung nach einem der Ansprüche 1 bis 3, dadurch gekennzeichnet, daß der Busankoppler (BA) auf einer in den betreffenden Installationsraum (9) einsetzbaren Trägerplatine (29) angeordnet ist.

5. Elektrische Anschlußvorrichtung nach Anspruch 4, dadurch gekennzeichnet, daß die Trägerplatine (29) eine Steckvorrichtung (30) für einen elektrischen Eingang (25) des Senders und für einen elektrischen Ausgang (28) des Empfängers des lichtelektrischen Wandlers (24) enthält und daß der Busankoppler (BA) eine zu der Steckvorrichtung (30) komplementäre Steckvorrichtung (31) mit einem elektrischen Ausgang für den Eingang (25) des Senders und einen elektrischen Eingang für den Ausgang (28) des Empfängers besitzt und daß an der Trägerplatine (29) elektrische Anschlüsse (41,42) für ein optisches Sendeelement (32) und für ein optisches Empfangselement (33) vorgesehen sind.

6. Elektrische Anschlußvorrichtung nach Anspruch 5, dadurch gekennzeichnet, daß das Sendeelement (32) in einem separaten Lichteinkoppler (34) mit einem Lichtfenster (38) und einer Lichtleiteranschlußvorrichtung (40) angeordnet und über eine flexible elektrische Leitung (35) mit dem Anschluß (42) der Trägerplatine (29) verbunden ist.

7. Elektrische Anschlußvorrichtung nach einem der Ansprüche 1 bis 6, dadurch gekennzeichnet, daß das Empfangselement (33) in einem separaten Lichtauskoppler (36) mit einem Lichtfenster (39) und einer Lichtleiteranschlußvorrichtung (40) angeordnet und über eine flexible elektrische Leitung (37) mit dem Anschluß (41) der Trägerplatine (29) verbunden ist.

8. Elektrische Anschlußvorrichtung nach einem der Ansprüche 4 bis 7, dadurch gekennzeichnet, daß das Sendeelement (32) und das Empfangselement (33) des lichtelektrischen Wandlers (24) direkt an die Anschlüsse (41,42) der Trägerplatine (29) angeschlossen sind und an das Lichtfenster (38',39') des Sende- und Empfangselementes (32, 33) je ein flexibler Lichtleiter (43,44) optisch angekoppelt ist, und an die Lichtfenster (38,39) der freien Enden der Lichtleiter (43,44) je eine Lichtleiteranschlußvorrichtung (45) angekoppelt ist.

## Claims

1. An electrical connection device comprising a housing-like carrier (6) having a clamping means (16) provided therein for fixed connection of the power lines (11) of the building-side installation to the connection line (5) of an electrical apparatus,
the connection line (5) further including, in addition to the electrical lines, at least one light guide (LW1,LW2),
**characterized in**
that the connection device comprises an electrical bus coupling means (BA) which is arranged in an installation chamber (9) of the carrier (6) separated from the clamping means (16) and is provided with an electrical contact means (20) for a bus line (12), and that the bus coupling means (BA) is connected to a photoelectric converter (24) arranged to be coupled to said at least one light guide (LW1,LW2) of the connection line (5) via an light guide connection means (40,45).

2. The electrical connection device according to claim 1, characterized in that, on the one hand, the clamping means (16) for the power lines and, on the other hand, the bus coupling means (BA) and the photoelectric converter (24) are arranged in adjacent installation chambers (8,9) of the carrier (6).

3. The electrical connection device according to claim 1 or 2, characterized in that the connection line (5) and the light guide (LW1,LW2) thereof are inserted into the installation chamber (8) of the clamping means (16), that said at least one light guide (LW1,LW2) extends through the installation chamber (8) of the clamping means (16) into the installation chamber (9) of the bus coupling means (BA) and therein is coupled to an light guide connection means (40,45) of the photoelectric converter (24).

4. The electrical connection device according to any one of claims 1 to 3, characterized in that the bus coupling means (BA) is arranged on a supporting plate (29) to be inserted into the respective installation chamber (9).

5. The electrical connection device according to claim 4, characterized in that the supporting plate (29) is provided with a plug connection (30) for an electric input (25) of the transmitter and for an electric output (28) of the receiver of the photoelectric converter (24), and that the bus coupling means (BA) comprises a plug connection (31) which is complementary with the above plug connection (30) and has an electrical output for the input (25) of the transmitter and an electrical input for the output (28) of the receiver, and that the supporting plate (29) has electrical terminals (41,42) provided thereon for an optical transmitter element (32) and for an optical receiver element (33).

6. The electrical connection device according to claim 5, characterized in that the transmitter element (32) is arranged in a separate light input coupler (34) comprising a light window (38) and an light guide connection means (40) and is connected to the terminal (42) of the supporting plate (29) via a flexible electric line (35).

7. The electrical connection device according to any one of claims 1 to 6, characterized in that the receiver element (33) is arranged in a separate light output coupler (36) comprising a light window (39) and an light guide connection means (40) and is connected to the terminal (41) of the supporting plate (29) via a flexible electric line (37).

8. The electrical connection device according to any one of claims 4 to 7, characterized in that the transmitter element (32) and the receiver element (33) of the photoelectric converter (24) are connected directly to the terminals (41,42) of the supporting plate (29), that the light windows (38',39') of the transmitter and receiver elements (32,33) respectively have a flexible light guide (43,44) optically coupled thereto and that the light windows (38,39) of the free ends of the light guides (43,44) respectively have an light guide connection means (45) coupled thereto.

## Revendications

1. Dispositif de raccordement électrique avec un support (6) de type boîtier et un dispositif à bornes (16) situé dans celui-ci pour connecter de façon fixe les lignes électriques (11) de l'installation côté immeuble à la ligne de raccordement (5) d'un appareil électrique, la ligne de raccordement (5) contenant en plus des lignes électriques encore au moins un guide de lumière (LW1, LW2), caractérisé en ce que le dispositif de raccordement présente un accoupleur de bus (BA) électrique, qui est disposé dans un espace d'installation (9) du support (6) séparé du dispositif à bornes (16) et dispose d'un dispositif de contact électrique (20) pour une ligne de bus (12), et en ce que l'accoupleur de bus (BA) est relié à un convertisseur photoélectrique (24) qui peut être couplé de façon optique par l'intermédiaire d'un dispositif de raccordement de guide de lumière (40, 45) audit au moins un guide de lumière (LW1, LW2) de la ligne de raccordement (5).

2. Dispositif de raccordement électrique selon la revendication 1, caractérisé en ce que le dispositif à bornes (16) pour les lignes électriques d'une part, ainsi que l'accoupleur de bus (BA) et le convertisseur photoélectrique (24) d'autre part, sont disposés dans des espaces d'installation (8, 9) adjacents du support (6).

3. Dispositif de raccordement électrique selon la revendication 1 ou 2, caractérisé en ce que la ligne de raccordement (5) et ses guides de lumière (LW1, LW2) sont amenés dans l'espace d'installation (8) du dispositif à bornes (16), en ce que ledit au moins un guide de lumière (LW1, LW2) s'étend à travers l'espace d'installation (8) du dispositif à bornes (16) jusque dans l'espace d'installation (9) de l'accoupleur de bus (BA) et y est couplé avec un dispositif de raccordement de guide de lumière (40, 50) du convertisseur photoélectrique (24).

4. Dispositif de raccordement électrique selon l'une quelconque des revendications 1 à 3, caractérisé en ce que l'accoupleur de bus (BA) est disposé sur une platine de support (29) pouvant être insérée dans l'espace d'installation (9) respectif.

5. Dispositif de raccordement électrique selon la revendication 4, caractérisé en ce que la platine de support (29) contient un dispositif à fiches (30) pour une entrée électrique (25) de l'émetteur et pour une sortie électrique (28) du récepteur du convertisseur photoélectrique (24), et en ce que l'accoupleur de bus (BA) possède un dispositif à fiches (31) complémentaire au dispositif à fiches (30) avec une sortie électrique pour l'entrée (25) de l'émetteur et une entrée électrique pour la sortie (28) du récepteur, et en ce que sur la platine de support (29), des raccordements électriques (41, 42) sont prévus pour un élément d'émission optique (32) et pour un élément de réception optique (33).

6. Dispositif de raccordement électrique selon la revendication 5, caractérisé en ce que l'élément d'émission (32) est disposé dans un coupleur de lumière (34) séparé avec une fenêtre de lumière (38) et un dispositif de raccordement de guide de lumière (40) et relié par l'intermédiaire d'une ligne électrique flexible (35) au raccordement (42) de la platine de support (29).

7. Dispositif de raccordement électrique selon l'une quelconque des revendications 1 à 6, caractérisé en ce que l'élément de réception (33) est disposé dans un découpleur de lumière (36) séparé avec une fenêtre de lumière (39) et un dispositif de raccordement de guide de lumière (40) et relié par l'intermédiaire d'une ligne électrique flexible (37) au raccordement (41) de la platine de support (29).

8. Dispositif de raccordement électrique selon l'une quelconque des revendications 4 à 7, caractérisé en ce que l'élément d'émission (32) et l'élément de réception (33) du convertisseur photoélectrique (24) sont raccordés directement aux raccordements (41, 42) de la platine de support (29), et respectivement un guide de lumière (43, 44) flexible est accouplé optiquement à la fenêtre de lumière (38', 39') de l'élément d'émission et de réception (32, 33), et en ce que respectivement un dispositif de raccordement de guide de lumière (45) est accouplé aux fenêtres de lumière (38, 39) des extrémités libres des guides d'onde (43, 44).
